# EUROPEAN PATENT SPECIFICATION

(11) **EP 3 812 744 B1**
(45) Date of publication and mention of the grant of the patent: **02.12.2026**
(21) Application number: 19306385.6
(22) Date of filing: 24.10.2019
(51) Int. Cl.: G01N 21/64, G01J 3/10, G02B 21/00, G01N 21/65

(54) **APPARATUS FOR PERFORMING PHOTOCHEMICAL MEASUREMENTS ON A LIQUID OR LIQUID-CONTAINING SAMPLE**
VORRICHTUNG ZUR DURCHFÜHRUNG FOTOCHEMISCHER MESSUNGEN BEI EINER FLÜSSIGKEIT ODER EINER FLÜSSIGKEITSHALTIGEN PROBE
APPAREIL PERMETTANT D'EFFECTUER DES MESURES PHOTOCHIMIQUES SUR UN LIQUIDE OU SUR UN ÉCHANTILLON CONTENANT UN LIQUIDE

(43) Date of publication of application: 28.04.2021
(73) Proprietor: Centre National de la Recherche Scientifique, 75016 Paris (FR); Ecole Normale Supérieure de Paris, 75320 Paris Cedex 05 (FR); SORBONNE UNIVERSITE, 75006 Paris (FR)
(72) Inventor: CHOUKET, Raja, 75005 Paris (FR); ESPAGNE Agathe, 92120 Montrouge (FR); JULLIEN, Ludovic, 94110 Arcueil (FR); LEMARCHAND, Annie, 91360 Villemoisson sur Orge (FR); LE SAUX Thomas, 92800 Puteaux (FR); PELISSIER-TANON Agnés, 92210 Saint Cloud (FR); SIGNON COLONNA BOZZI Laurence, 20128 Grosseto Prugna (FR); ZHANG Ruikang, 75005 Paris (FR)
(74) Representative: Hautier IP

(56) References cited:
- US-A1- 2011 057 119
- US-A1- 2012 287 244
- RUIKANG ZHANG ET AL: "Simple imaging protocol for autofluorescence elimination and optical sectioning in fluorescence endomicroscopy", OPTICA, vol. 6, no. 8, 30 July 2019 (2019-07-30), pages 972, XP055682935, DOI: 10.1364/OPTICA.6.000972

## Description

The invention relates to an apparatus for performing photochemical measurements on a liquid or liquid-containing sample. More particularly, it relates to an apparatus for measuring at least a kinetic parameter of a photochemical reaction involving at least one chemical species contained in the sample under different illumination conditions. The kinetic parameter may be, for instance, a quantum yield or a relaxation time of the reaction or of a step thereof.

The invention applies, for instance, to the measurement of relaxation times of photoactive chemical species such as fluorescent molecules - in particular fluorescent proteins (FPs) and reversibly photoswitchable fluorescent proteins (RSFPs). The invention is not limited to the case of fluorescent molecules, and applies to all photoactive chemical species showing a change in at least an optical property (fluorescent emission, absorbance, absorption spectrum, Raman scattering, etc.) under the effect of light. Also, the invention is not limited to the measurement of relaxation times, but can measure different parameters describing the temporal evolution (kinetics) of photochemical reactions affecting such an optical property.

The term "chemical species" is understood to mean a molecule, a molecular ion or a complex.

A "photoactive chemical species" is a chemical species undergoing a chemical transformation under the effect of light.

"Reversibly photoswitchable" molecules are a particular class of photoactive species (e.g. proteins) that have at least two distinct states having different optical (e.g. fluorescence) properties and that may be made to pass from one state to the other reversibly under the effect of light. Examples of fluorescent reversibly photoswitchable species are "Dronpa" and the complex "Spinach-DFHBI" ("Spinach" being an RNA aptamer and DFHBI a fluorogenic probe). These species may in particular be used as labels or markers.

Fluorescence imaging, and particularly fluorescence microscopy, has become essential for biology in view of the high sensitivity and versatility of fluorescent labels. The common approach to identify and discriminate fluorescent labels is to read out the fluorescence signal in the spectral domain. Yet spectral discrimination exhibits limitations for highly multiplexed observations. Even with a rich hardware of light sources, optics corrected for chromatic aberration, dichroic mirrors, optical filters, etc., spectral analysis of overlapping absorption and emission bands can routinely discriminate a maximum of four labels. State-of-the art spectral unmixing brings this number to six, five of which are genetically encoded ([Valm 2017]) but at significant cost in terms of photon budget and computation time. This severely limits the discriminative power of emerging genetic engineering strategies.

Since the optimization of fluorophores (cross section for light absorption, quantum yield of luminescence, half-width of absorption/emission bands) has essentially reached its physical limits and fluorescence should remain a much favored observable for imaging live cells, it is highly desirable to complement the spectral dimension by one or more additional dimensions for further discriminating fluorophores. And indeed several techniques have been developed to discriminate fluorophores using dynamical - i.e. temporal - information characterizing their absorption-fluorescence emission photocycles.

For instance, in Fluorescence Lifetime Imaging Microscopy (FLIM), the lifetimes of excited states have been exploited to distinguish fluorophores ([Lakowicz 1992]). However, beyond requiring sophisticated instruments and fast electronics, this technique is limited by the narrow lifetime dispersion (over less than an order of magnitude) of the bright fluorophores currently used in fluorescence imaging. Hence multiplexed fluorescence lifetime imaging has necessitated deconvolutions (which take time) or the adoption of subtractive schemes (which lack robustness and decrease the signal-to-noise ratio).

Reversibly photoswitchable fluorophores (RSF - of which RSFP are a subclass) do not suffer from this drawback. These labels benefit from a rich photochemistry, which goes much beyond the absorption-fluorescence emission photocycle. In reversibly photoswitchable fluorophores, illumination drives several photocycles including photochemical and thermal steps, which intervene over a wide palette of relaxation times (µs to s) so as to facilitate discrimination at timescales compatible with real time observations of biological phenomena. Hence several protocols have exploited the time response of the fluorescence to light variations for imaging spectrally similar RSFs ("dynamic contrast") by relying on neither deconvolution nor subtraction schemes. One may mention for instance OLID (Optical Lock-In Detection), described in [Marriott 2008]; TRAST (Transient State Imaging Microscopy), described in [Widengren 2010]; SAFIRe (Synchronously Amplified Fluorescence Image Recovery), described in [Richards 2010], OPIOM (Out-of-Phase Imaging after Optical Modulation), described in [Querard 2015] and in WO 2015075209; and Speed OPIOM ([Querard 2017] and WO2018/041588. Ruikang Zhang et al. "Simple imaging protocol for autofluorescence elimination and optical sectioning in fluorescence endomicroscopy", Optica 6, 972-980 (2019), discloses a fiber-optic epifluorescence imaging device for out-of-phase imaging after optical modulation.

Prior to implementing these protocols, it is necessary to characterize the labels by measuring their relaxation times for one or several excitation wavelengths (OLID, SAPHIRe, and Speed OPIOM rely on two-color illumination). In some cases, moreover, the relaxation times may be dependent on the illumination intensity (this happens in particular when the rate of the photochemical reaction on which the detection relies is limited by a light-induced step, rather than a thermal-induced step). The effect of light intensity on photochemical kinetics also needs to be characterized.

Such a characterization, however, can be very cumbersome. First, it is not currently possible to explore all the relevant intensity ranges - which may extend over 5 orders of magnitude, or even more, depending on the different types of fluorescence microscopy (from 10⁻¹-10¹ W/cm² for widefield microscopy up to 10⁴-10⁶ W/cm² for confocal microscopy) - with a single measurement apparatus. Second, measurements performed on liquid or liquid-containing samples are suitable to be affected by diffusion effects, as fresh ground-state and illuminated molecules continuously feed and quit the detection region respectively. It is worth noting that while diffusion makes more difficult extracting relevant photochemical information from the measured signal, it also has a favorable effect in that the continuous refreshing of the sample between successive measurements mitigates the detrimental influence of bleaching, which may otherwise lead to signal extinction.

There is therefore a need for an apparatus allowing performing photochemical kinetics measurements on a liquid or liquid-containing sample over a wide range of intensities and by keeping the impact of diffusion negligible.

According to the invention, this aim is achieved by an apparatus for performing photochemical measurements on a liquid or liquid-containing sample according to claim 1, comprising: a light generating system, an optical system configured for directing light from the light generating system towards the sample and a sensing system for measuring at least one optical property of the sample, characterized in that:
- the light generating system is configured for generating light at at least one wavelength with an intensity level within a range spanning at least three and preferably at least five orders of magnitude; and in that:
- the optical system is configured for directing light from the light generating system towards the sample so as to generate a uniform light intensity level, with a tolerance of plus or minus 30%, preferably plus or minus 20% and even more preferably plus or minus 10%, within a cylindrical region of the sample having a height larger than or equal to five times its radius.

The light generating system comprises at least a first and a second light sources configured for generating light at a same wavelength (i.e. having at least partially overlapping spectra) and with intensity levels adjustable within a first intensity range and a second intensity range, respectively, the first intensity range comprising intensity levels higher than those of the second intensity range, a union of the first and the second intensity ranges spanning at least three and preferably at least five orders of magnitude.

According to the invention, the apparatus comprises a plurality of first light sources configured for generating light at different wavelengths, and a plurality of respective second light sources, each second light source being configured for generating light at a same wavelength (i.e. having at least a partially overlapping spectrum) than a corresponding first light source, the apparatus further comprising at least a first dichroic mirror for combining light beams emitted by the first light sources and a second dichroic mirror for combining light beams emitted by the second light sources.

Particular embodiments of the apparatus constitute the subject matter of the depending claims.

Additional features and advantages of the present invention will become apparent from the subsequent description, taken in conjunction with the accompanying drawings, wherein:
- Figures 1 represents an apparatus according to a first embodiment of the invention, comprising laser sources and LED sources;
- Figures 2A and B illustrate the illumination profile produced by the LED sources of the apparatus of figure 1;
- Figures 3A - 3D illustrate the illumination profile produced by the laser sources of the apparatus of figure 1;
- Figure 4 represents an apparatus according to a second embodiment of the invention, also comprising laser sources and LED sources;
- Figures 5A - 5D illustrate the illumination profile produced by the laser sources of the apparatus of figure 4;
- Figures 6A - 6C and 7A - 7D illustrate the impact of diffusion on relaxation time measurement performed using "spherical" illumination geometry;
- Figure 8 illustrate the impact of diffusion on relaxation time measurement performed using "cylindrical" illumination geometry according to the invention;
- Figure 9A is an energy level scheme of an hypothetical RSFP suitable to be characterized using an apparatus according to the invention and the transitions between these energy levels; figure 9B is a reduced energy level scheme obtained through a quasi-steady state approximation;
- Figures 10A and 10B illustrate an illumination and measurement sequence suitable to be used to characterize the RSFP of figures 9A and 9B;
- Figure 11 is an energy level scheme of an hypothetical FP suitable to be characterized using an apparatus according to the invention and the transitions between these energy levels; and
- Figures 12A and 12B illustrate an illumination and measurement sequence suitable to be used to characterize the FP of figure 11.

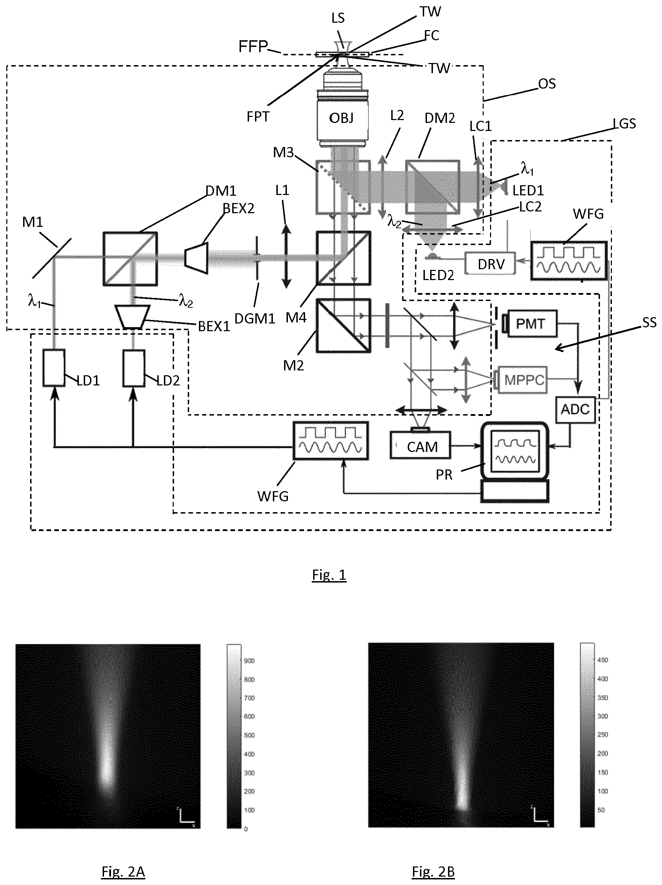

Figure 1 illustrates an apparatus according to a first embodiment of the invention. The apparatus comprises a light generating system LGS for generating light at two different wavelengths with light intensities covering five orders of magnitude (from 0.5 W.cm² to 50 kW.cm²). It also comprises a fluidic cell FC for containing a liquid sample having at least a transparent wall TW and an optical system OS configured for directing light from the light generating system into the fluidic cell through the transparent wall and for collecting a fluorescent signal issued from the sample, and a sensing system SS for measuring said fluorescent signal.

The fluidic cell FC may be simply formed by two glass plates (e.g. 150 µm thick) held separated by a few to a few tens micrometers (e.g. 50 µm) by spacers. In different embodiments more complex fluidic cells, e.g. including microfluidic circuits, may be used.

Light generating system LGS comprises a Light Emitting Diodes (LED) stage for the "low intensity" regime and a laser diode stage for the "high intensity" regime. Preferably, the "high" intensity and "low" intensity regimes slightly overlap, or have a very small gap between them (less than 10% of the upper bound of the low intensity regime) and their union spans at least three and preferably at least five orders of magnitude.

The LED stage comprises a blue color Light Emitting Diodes LED1 (M470L4, Thorlabs, NJ) filtered at λ₁= 480 ± 20 nm (FF01-480-40, Semrock, Rochester, NY) and a UV Light Emitting Diodes LED2 (M405L3, Thorlabs, NJ) filtered at λ₂=405 ± 20 nm (ET 405/20x, Chroma Technologies, Bellows Falls, VT) as light sources. The current driving each LED is regulated by a LED driver DRV (DC 4104, Thorlabs, NJ) operated in the external control mode and driven by the two analog outputs of a ADC card (usb-1604hs-2ao, Measurement Computing, Norton, MA) used for data acquisition or a waveform generator WFG.

The laser diode stage comprises a first laser diode LD1 at λ₁= 488 nm (LBX serie, Oxxius, Lannion, France) and a second laser diode LD2 at λ₂= 405 nm (06-01 Serie, Cobolt, Solna, Sweden), both driven by waveform generator WFG.

Optical system OS comprises a first section interfacing with the LED stage of the light generating system, a second section interfacing with the laser diode stage of the light generating system, a third section - comprising an objective OBJ - interfacing with the fluidic cell and a fourth section interfacing with the sensing system SS.

The first section of the optical system comprises two light condensers LC1, LC2 (ACL25416U, Thorlabs, Newton, NJ, f = 16 mm) placed just after each one of LED1 and LED2 to collimate light, a movable dichroic mirror M3 (T425LPXR, Chroma Technologies, Bellows Falls, VT) for deflecting the light beams issued by LED1 and LED2 - and which is removed from the optical path when the laser diodes are operated - and a lens L2 (f = 100 mm) used to focus the light at the front focal plane FFP of objective OBJ.

The second section of the optical system comprises a first beam expander BEX1 (an afocal system made of two lenses: LA1213-A, Thorlabs, NJ, f=50 mm and LA1289-A, Thorlabs, NJ f=30 mm) on the path of the light beam issued from LD2, a mirror M1 for deflecting the light beam issued from LD1, a dichroic mirror DM2 for combining the two light beams, and a second beam expander BEX1 comprising two achromatic lenses (AC254-100-A, Thorlabs, Newton, NJ, f=100 mm and AC254-050-A, Thorlabs, Newton, NJ f=50 mm), a diaphragm DGM1, more precisely an iris (SM1D12CZ, Thorlabs, NJ, US), selecting the central part of the combined and enlarged beams and an achromatic lens L1 (AC254-200-A, f=200mm, Thorlabs, NJ ,US) for focusing them on the rear focal plane of the objective. The iris is conjugated to the front focal plane FFP of the objective, so that the size of the illuminated area can be adjusted by tuning the aperture of the iris. Moreover, as it will be discussed later, the fact of selecting the central part of the laser light beams is instrumental in ensuring an approximately uniform illumination of the sample at high light intensities.

In some other embodiments, the first beam expander may be optional, depending on the properties of LD2.

The third section of the optical system comprises, as already mentioned, a 50X objective OBJ (MPLFLN, NA 0.8, Olympus Corporation, Tokyo, Japan) having a front focal plane FFP comprising a focal point FPT which is inside - and preferably at the center - of the fluidic cell FC.

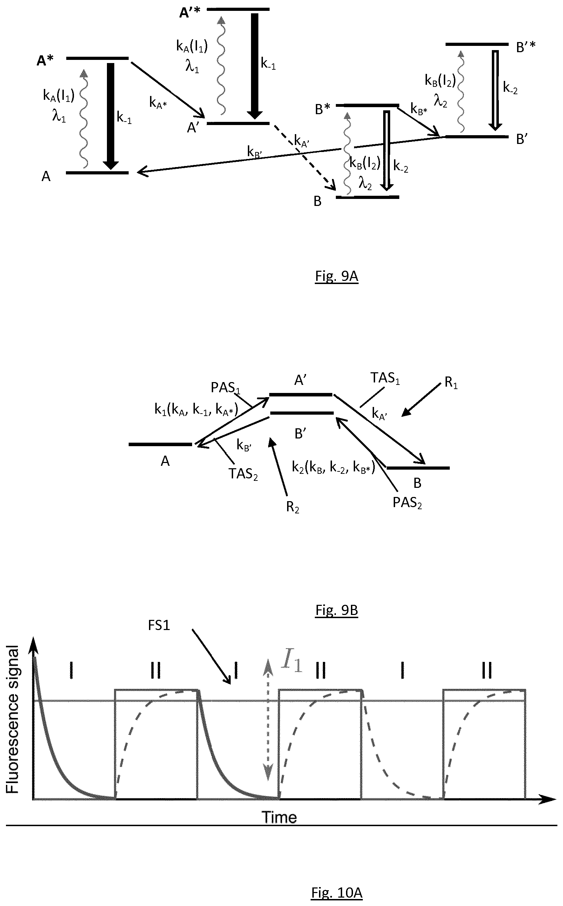

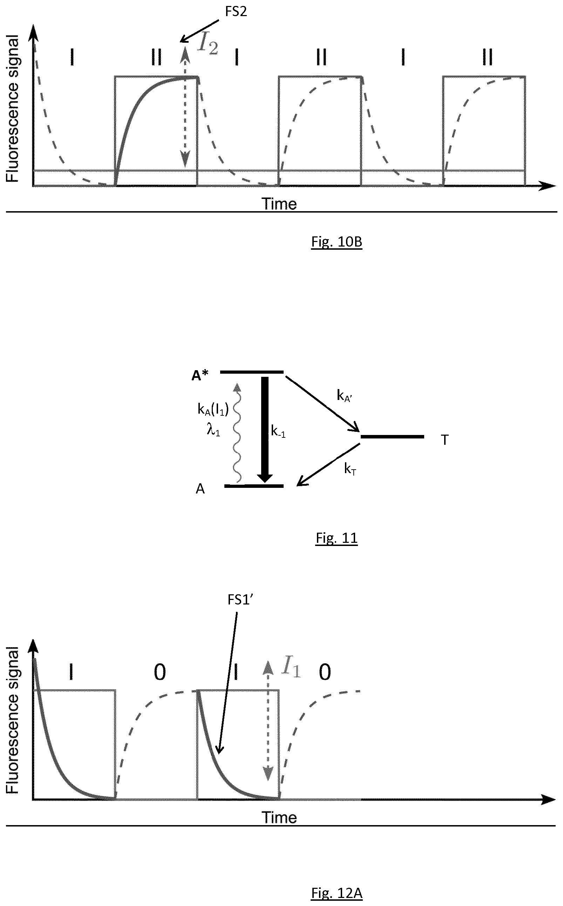

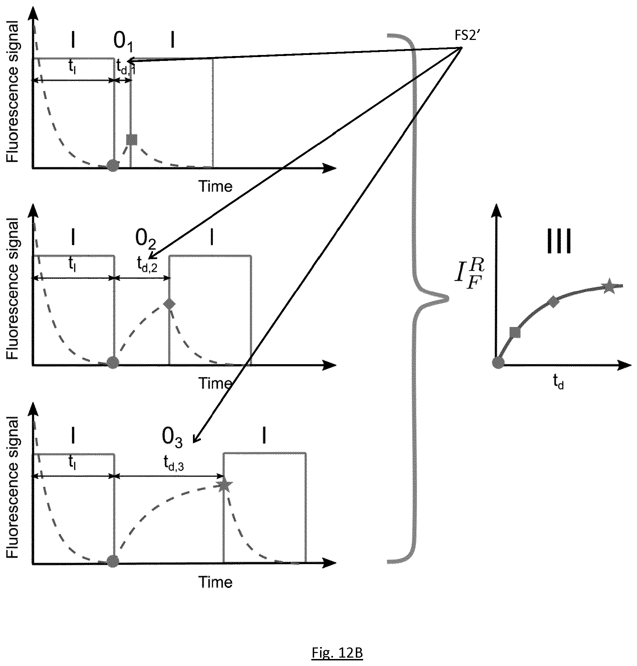

The fourth section of the optical system comprises a dichroic mirror M4 for separating the fluorescence light collected by objective OBJ, which has already traversed dichroic mirror M3 (if not withdrawn), from the laser beam, and a mirror M2 for deflecting said fluorescence light. A set of beam splitters and focusing lenses allows directing part of the fluorescence light onto a photomultiplier PMT, part of it on a multi-pixel photon counter MPPC and part of it on a camera CAM. The signals issued from the photomultiplier PMT and from the multi-pixel photon counter MPPC are converted to digital format by an analog-to-digital converter ADC and fed to a data processor PR, such as a computer, which also receives signals from the camera CAM. The data processor processes the measurements from the photomultiplier PMT and from the multi-pixel photon counter in order to compute at least a time constant representative of a photochemical reaction within the sample. It also drives the waveform generators WFG, and therefore controls the light sources by turning them on and off and by setting their intensity values for illuminating the sample in the fluidic cell according to a predetermined illumination sequence, examples of which will be provided later (see figures 10A, 10B, 12A, 12B).

The sensing system SS comprises the camera CAM, the photomultiplier PMT and the multi-pixel photon counter MPPC. The camera is used to acquire a fluorescence image of the sample; the photomultiplier PMT and the multi-pixel photon counter MPPC are used to acquire the signals from which the relaxation times are computed. The multi-pixel photon counter MPPC is preferably used with the LEDs.

The illumination profiles from the LEDs were characterized by imaging, at λ₁ and λ₂, a 5 µM fluorescein solution in pH 7.4 PBS buffer embedded in a 3 mm-thick agarose gel using a 24 mm objective. Figures 2A and 2B show that the LED illumination profiles are homogeneous over 2 mm along the z axis (height, parallel to the optical axis) of a 0.5 mm-radius cylinder.

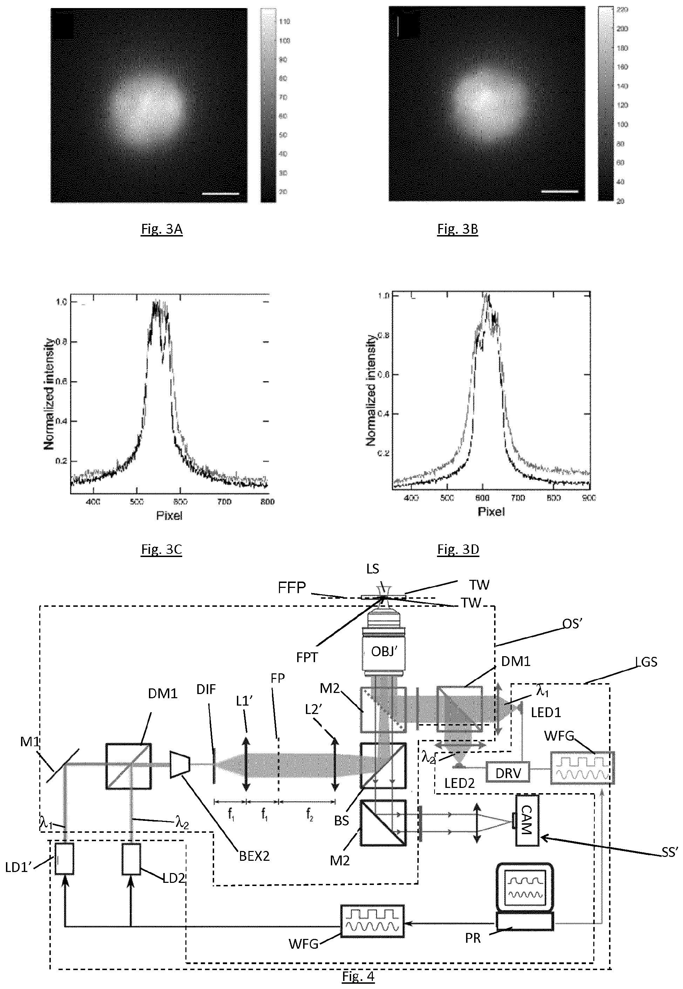

The illumination profiles from the laser diodes were characterized by imaging, at λ₁ and λ₂, a thin layer of 10 µM fluorescein solution in pH 7.4 PBS buffer (sandwiched between two glass plates; 5 µm of thickness) at different axial positions ranging from 0 to 125 µm by means of a microscope composed of a 20x objective, a tube lens, an emission filter, and a camera. For each axial position, the diameter of the illuminated area was measured. For the setup displayed in Fig. 1, Fig.3A (at λ₁) and 3B (at λ₂) show that the illuminated area is rather homogeneous at 0 µm. Furthermore the λ₁ and λ₂ illumination profiles at 0 and 125 µm, displayed on Fig. 3C, 3D suggest that laser illumination at both wavelengths is substantially homogeneous along a cylindrical profile of height h = 125 µm and radius r₀ = 10 µm.

Figure 4 illustrates an apparatus according to a second embodiment of the invention. Compared to that of figure 1, the apparatus of figure 4 is better suited for imaging, as it favors a broader field of view, but achieves a slightly lower maximal light intensity. Compared to the apparatus of figure 1, that of figure 4 has a simpler sensing system SS', only comprising a camera CAM, and an optical system OS' with a different second (laser diode) section.

The second section of optical system OS' comprises:
- an afocal system BEX2 acting as an inverted beam expander consisting of two achromatic lenses (AC254-100-A, Thorlabs, Newton, NJ, f=100 mm and AC254-050-A, Thorlabs, Newton, NJ, f=50 mm) for shrinking the combined beams issued by the two laser diodes (in some other embodiments it may be optional, depending on the properties of the laser diodes);
- a light diffuser DIF (EDC-5, RPC photonics, Rochester, US) for uniformly diffusing the shrunk laser beam within a solid angle of 5°;
- a first achromatic lens L1' (AC254-030-A, Thorlabs, Newton, NJ) for collimating the diffused laser light beam. The diffused beam is therefore projected to the Fourier plane of the lens where spatial uniformity is achieved; and
- a second achromatic lens L2' (AC254-200-A, f = 200 mm, Thorlabs, NJ ,US) forming an image of a focal plane of the first lens, opposed to the light diffuser, on the rear focal plane of the objective OBJ'. The latter is also different from that of the apparatus of figure 1; it is a 60x objective (UPLSAPO60XW, NA 1.2, Olympus Corporation, Tokyo, Japan).

The illumination profiles from the LEDs are the same as that of the apparatus of figure 1, and have already been discussed with reference to figures 2A and 2B.

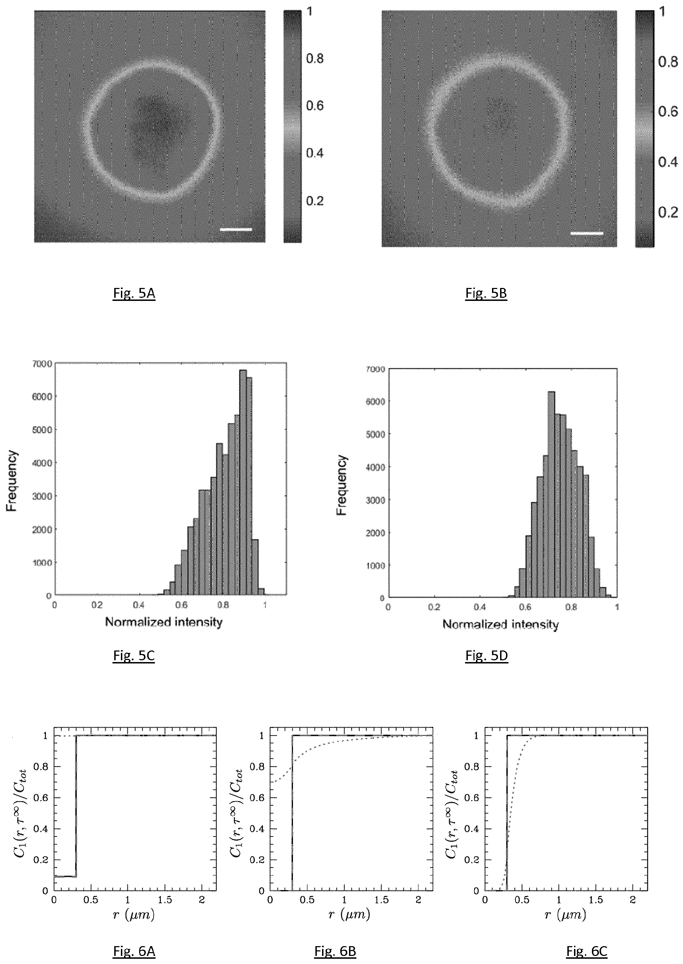

The illumination profiles from the laser diodes have been imaged from mapping the fluorescence emission from a 80 µm-thick layer of 5 µM fluorescein solution in pH 7.4 PBS buffer at λ₁ = 488 nm (figure 5A LD1) and λ₂ = 405 nm (figure 5B LD2) at the focal plane FFP of the objective. Figures 5C and 5C are histograms showing the distributions of the normalized light intensity at the pixels of the images of figures 5A and 5B, respectively. These histograms show that both light distributions exhibit excellent spatial uniformity with a fluctuation of less than 20% over a disk of 36 µm diameter in the focal plane.

For both embodiments, calibration of the light intensities may be performed by photochemical methods, known by themselves.

The embodiments of figures 1 and 4 are only provided as nonlimiting examples, and several different embodiments are possible.

For instance, the light generating system may generate light at only a single wavelength, or conversely at more than two wavelengths. The usable light sources are not limited to LEDs and laser diodes; for instance filtered discharge lamps, solid state or gas lasers etc. may be used instead; also, strongly attenuated (e.g. through expansion) laser beam may be used in the low-intensity mode, in which case a separate light source for each intensity regime may not be needed. Different light sensors may also be used in the sensing system. Also, fluorescence emission is not the only optical property which may be probed; absorption, Raman scattering and refractive index variations may also be measured. Several different layouts for the optical system may also be designed - provided that the optical system is suitable to generate, over all the required intensity range - an approximately uniform light intensity level (with a tolerance of plus or minus 30%, preferable plus or minus 20% and even more preferably plus or minus 10%) within a cylindrical region of the fluidic cell having a height larger than or equal to its radius (hereafter "cylindrical illumination"). Preferably, the radius will be of at least 0.3 µm and even more preferably of at least 3 µm.

The importance of obtaining cylindrical illumination, rather than "spherical" illumination, which is a first approximate model of illumination by tightly focused light, in order to mitigate the impact of molecular diffusion will now be explained with the help of a two-state model of a photochemical reaction.

Let C₁ and C₂ be two different states of same chemical species, having different optical properties e.g. fluorescent brightness; for instance, it will be assumed that C₁ is fluorescent with brightness Q when illuminated at λ₁ while C₂ exhibits negligible brightness. State C₁ is photochemically converted into state C₂ at (light-intensity dependent) rate constant ${k}_{21}^{i}$; state C₂ relaxes back to state C₁ at rate constant ${k}_{12}^{i}$ including photochemical and thermally driven contribution. An apparent thermodynamic constant ${K}_{12}^{i} = {k}_{12}^{i} / {k}_{21}^{i}$ is also defined.

Index "i" refers to different illuminating conditions. More particularly, i=I corresponds to illumination at λ₁ only, while i=II corresponds to illumination at both λ₁ and λ₂. For assessing the impact of diffusion on the fluorescence signal, only the case of type-I illumination will be considered; however type-II illumination will also be used in the illumination sequences discussed later.

It is possible to show, by solving the chemical kinetics equation, that under type-I illumination at intensity I₁ the concentrations ${C}_{1}^{I}$ and ${C}_{2}^{I}$ obey $\begin{matrix}{C}_{2}^{I} - {C}_{2}^{I , ∞} = {C}_{1}^{I , ∞} - {C}_{1}^{I} = - {C}_{2}^{I , ∞} exp \left(-\frac{t}{{τ}^{I}}\right) \\ {{C}^{I}}_{1} + {{C}^{I}}_{2} = {C}_{tot}\end{matrix}$ (1) where Cₜₒₜ is the total concentration and $\begin{matrix}{C}_{1}^{I , ∞} & = & \frac{1}{1 + {K}_{12}^{I}} {C}_{tot} \\ {C}_{2}^{I , ∞} & = & \frac{{K}_{12}^{I}}{1 + {K}_{12}^{I}} {C}_{tot}\end{matrix}$ (2) are the steady concentrations reached at large times and ${τ}^{I} = \frac{1}{{k}_{12}^{I} + {k}_{21}^{I}}$ (3) designates the relaxation time of the photochemical conversion of the two species C₁ and C₂. The fluorescent emission intensity (which is supposed to be only due to C₁) is given by ${I}_{F}^{I} = {QC}_{1}^{I} {I}_{1}$ (4) and $\frac{{I}_{F}^{I}}{{I}_{F}^{I , 0}} = 1 + \frac{{QC}_{tot} {I}_{1}}{{I}_{F}^{I , 0}} \frac{{K}_{12}^{I}}{1 + {K}_{12}^{I}} \left[exp\left(-\frac{t}{{τ}^{I}}\right)-1\right]$ (5) where ${I}_{F}^{I , 0}$ is the initial fluorescence intensity.

Let σ_{12,1}be the molecular cross section for the photoisomerization C₁→C₂ driven by wavelength λ₁, σ_{21,1} the molecular cross section for the photoisomerization C₂→C₁ driven by wavelength λ₁, and ${k}_{21}^{Δ}$ the thermal part of the rate constant for C₂→C₁. The rate constants can then be written: $\begin{matrix}{k}_{12}^{I} = {σ}_{12 , 1} {I}_{1} \\ {k}_{21}^{I} = {σ}_{21 , 1} {I}_{1} + {k}_{21}^{Δ}\end{matrix}$ (6) and therefore ${τ}^{I} = \frac{1}{{\sum }_{1} {I}_{1} + {k}_{21}^{Δ}}$ (7) where Σ₁ = σ_{12,1} + σ_{21,1}. It can then be seen that 1/τ₁ exhibits a linear dependence on I₁.

The case of spherical illumination will now be considered. It will be assumed that illumination is homogeneous within a sphere of radius r₀=0.3µm and then vanishes out within a spherical reservoir of radius R=2.2µm initially containing a liquid solution of the species C₁ at concentration Cₜₒₜ. Species C₁ and C₂ are supposed to diffuse with a same diffusion coefficient D, so that their concentrations obey C₁+C₂=Cₜₒₜ everywhere.

In the absence of diffusion (D=0) and in the presence of illumination, C₁ exponentially decays to a stationary value ${C}_{1}^{h , ∞}$ which is reached, to within 1%, in a time τ^{∞}, which is a function of k₁₂ and k₂₁. Outside the sphere, where there is no illumination, C₁ remains equal to Cₜₒₜ. Taking into account the diffusion, the dynamics of C₁ evolution is governed by $\frac{\partial {C}_{1}}{\partial t} = - \left({k}_{12}+{k}_{21}\right) {C}_{1} + {k}_{21} {C}_{tot} + D \left[\frac{{\partial }^{2} {C}_{1}}{\partial {r}^{2}}+\frac{2}{r}\frac{\partial {C}_{1}}{\partial r}\right]$ (8)

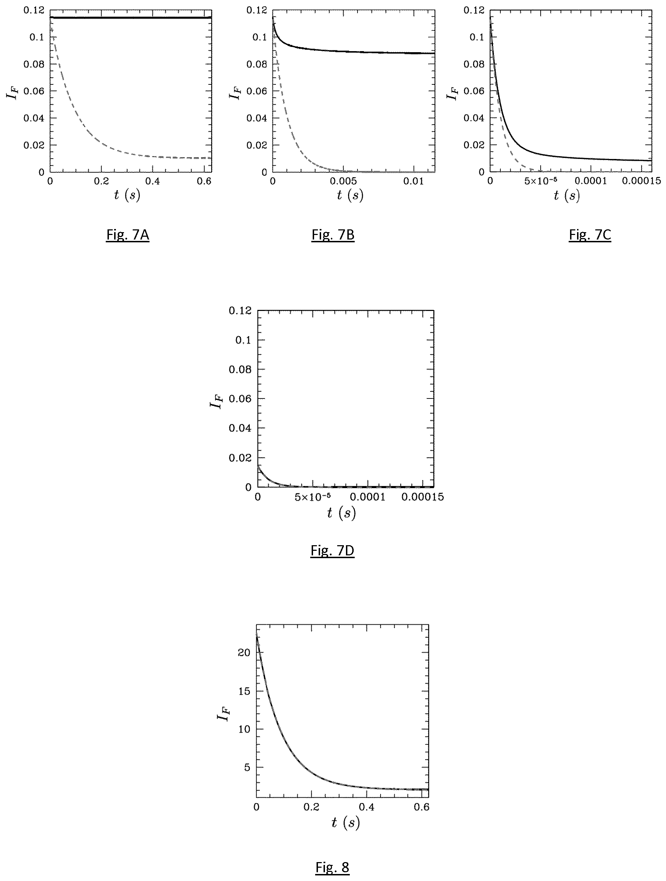

This equation has been solved numerically for k₂₁ = 1 s⁻¹, D = 100 µm² s⁻¹ and three different values of k₁₂ = 10 s⁻¹, 10³ s⁻¹, 10⁵ s⁻¹. The results of the numerical integration, normalized over Cₜₒₜ, are represented as dotted lines on figures 6A (k₁₂=10 s⁻¹), 6B (k₁₂=10³ s⁻¹) and 6C (k₁₂=10⁵ s⁻¹), while the results for D=0 (stepwise constant concentration) are represented as solid lines. Figures 7A, 7B and 7C represents the time evolution of the fluorescence intensity without (solid line) and with (dotted line) diffusion.

The difference between the results in the presence and absence of diffusion markedly depends on k₁₂, more precisely it increases as k₁₂ decreases. For high values of k₁₂, e.g. k₁₂=10⁵ s⁻¹, this effect can be mitigated by integrating the fluorescence intensity on the inner part of the sphere, e.g. between r=0 and r=r₀/2 (this is illustrated on figure 7D), provided that the signal-to-noise ratio is sufficient (note that integrating on only half of the radius decreases the volume by a factor of eight, resulting in a decrease of the signal-to-noise ratio of almost an order of magnitude). This, however, is insufficient for lower values of k₁₂, e.g. k_{12≤}10³ s⁻¹.

A more quantitative evaluation of the discrepancy between the results with and without diffusion may be given by computing the difference between the signal in the presence of diffusion and the exponentially-decaying solution ${C}_{1}^{h}$ obtained in the absence of diffusion according to: $J = \frac{{\int }_{t = 0}^{{τ}^{∞}} \left({I}_{F}^{′}-{C}_{1}^{h}V\right) dt}{\left({C}_{tot}-{C}_{1}^{h , ∞}\right) {Vτ}^{∞}}$ (9) with ${I}_{F}^{′} = {\int }_{0}^{V} {C}_{1} dv$ and where V is the volume of the illuminated region, dv is the differential of the volume, and C₁ is solution of Eq.(8).

The deviation J tends to 1 when the rate constant k₁₂ is small compared to the typical frequency D/r₀² and vanishes for sufficiently large values of k₁₂. As expected, J is smaller and the results are improved for a smaller value of the diffusion coefficient. Interestingly, J does not sensitively depend on the rate constant k₂₁. Calculations show that the determination of the relaxation time using the exponential decay without diffusion is valid to within a few percent in a spherical reactor for r₀ = 0.3 µm and D= 100 µm² s⁻¹ only if the rate constant k₁₂ of the photochemical step is larger than or equal to 10⁷ s⁻¹, which is very restrictive. More generally, a cutoff rate constant ${k}_{12}^{c} ≃ {10}^{4} \frac{D}{{r}_{0}^{2}}$ (10) can be introduced.

Diffusion is negligible to within a few percent in the spherical geometry provided that ${k}_{12} \geq {k}_{12}^{c}$. Even with a larger cell of radius r₀ = 10 µm, the condition would become k₁₂≥10⁴ s⁻¹, which remains constraining.

Similar calculations have been performed considering a homogeneous illumination within a cylinder with height h=80 µm, radius r₀=0.3 µm and R=2.2 µm. Figure 8 shows that the time evolution of the fluorescence signal with diffusion (D=100 µm² s⁻¹) are indistinguishable from that obtained in the absence of diffusion (dotted line - representing data with diffusion - overlaps the solid line corresponding to the no-diffusion case) even for a very small value of k₁₂ (k₁₂=10 s⁻¹) and a very small cell radius r₀=0.3µm. More generally, in cylindrical geometry, the cutoff rate constant (above which diffusion is negligible) is given by ${k}_{12}^{c} ≃ \frac{D}{{r}_{0}^{2}}$ (11) which is much more favorable (by a factor of 10⁴) than the result obtained in spherical geometry. These results have been obtained for h=80 µm, which can be considered "infinite" compared with the radius of the cylinder and that of the spherical reservoir (and indeed an infinite value for h has been used in numerical computations), however they approximately hold whenever h is sufficiently larger than r₀, and particularly when h≥5·r₀ and even more when h≥10·r₀.

The use of the apparatuses of figures 1 and 4 for determining time constants representative of a photochemical reaction within a sample will now be discussed with the help of two examples. The first example concerns the measurement of relaxation times in a reversibly photoswitchable fluorescent protein (RSFP) and is illustrated by figures 9A, 9B, 10A and 10B. The second example concerns the measurement of relaxation times in a fluorescent protein (FP) and is illustrated by figures 11, 12A and 12B.

A hypothetical RSFP, whose energy levels are shown in figure 9A, can take four different configurations, designated by A, A', B and B', each one existing either in a ground state or in an excited state A*, A'*, B*, B'*. States A* and A'* are fluorescent and, for the sake of simplicity, they are considered to have a same brightness and identical absorption and fluorescence spectra. States B* and B'* are not fluorescent, or have a much lower brightness than A* and A'*.

Absorption of a photon at wavelength λ₁ excites state A to A* and state A' to A'* with a rate constant k_{A}(I₁) proportional to the light intensity I₁ at wavelength λ₁. Radiative decay occurs very fast, with rate constant k₋₁, independent of light intensity. Moreover, state A* can also experience non-radiative decay to state A' at a thermal (i.e. independent of light intensity) rate constant k_{A*}, and A' can experience non-radiative decay to state B at a comparatively small thermal rate k_{A'}. The conversion of molecules from state A to B, through a photochemical step (A → A*) and two thermal steps (A*→A', quite fast, and A'→B, slow) results in a progressive reduction of the fluorescence intensity.

Absorption of a photon at wavelength λ₂ excites state B to B* and state B' to B'* with a rate constant k_{B}(I₂) proportional to the light intensity I₂ at wavelength λ₂. Non-radiative decay occurs very fast, with rate k₋₂, independent from light intensity. Moreover, state B* can also experience a slower non-radiative decay to state B' at a thermal (i.e. independent from light intensity) rate k_{B*}, and B' can experience non-radiative decay to state A at a comparatively small thermal rate k_{B'}. The conversion of molecules in state B to A, through a photochemical step (B → B*) and two thermal steps (B*→B', B'→A) results in a progressive recovery of fluorescence.

For realistic light intensities, state A* is created with a rate constant (k_{A}) which is much lower than the destruction rate constant (k₋₁+k_{A*}), therefore a quasi-steady state is quickly achieved. The same applies to states A'*, B* and B'*. This leads to the simplified photocycle of figure 9B, comprising only states A, A', B and B'. Fluorescence emission is proportional to the sums of the concentrations of A and A' (weighted sum, if the brightness of these states are different).

Bright state A is converted into dark state B through a first reaction R₁ comprising a photochemical step PAS₁ A → A' with rate constant k₁, which is a function of k_{A}, k₋₁ and k_{A*} and depends on I₁ through k_{A}, and a thermal step TAS₁ A'→ B with intensity-independent rate constant k_{A'} (note that the first step alone does not affect the fluorescence signal, under the simplifying assumption of identical brightness of A and A'). Dark state B is converted back to bright state A through a second reaction R₂ comprising a photochemical step PAS₂ B → B' with rate constant k₂, which is a function of k_{B}, k₋₂ and k_{B*} and depends on I₂ through k_{B}, and a thermal step TAS₂ B'→ A with intensity-independent rate constant k_{B'} (note that the first step alone does not affect the fluorescence signal, as both B and B' are dark).

Illuminating the RSFP at wavelength λ₁ (illumination type I) induces then a fluorescence signal decreasing with time. At "low" I₁ values (i.e. light intensities at λ₁), the decay rate of the fluorescent signal will essentially be determined by the photochemical step PAS₁, while at "high" I₁ values it will essentially be determined by the thermal step TAS₁. Therefore, measurements at different light intensities at wavelength λ₁ (I_{low} and I_{high} conditions) will provide non-redundant information on the RSFP dynamics.

When the fluorescence signal is extinguished, or at least has reached a plateau, illuminating RSFP at both wavelengths λ₂ and λ₁ (illumination type II) will induce a recovery of the fluorescence signal. Note that the recovery is due to the photochemical reaction induced by photons at λ₂, but photons at λ₁ are required to excite A and A' and get non-vanishing fluorescence emission. At "low" I₂ values (i.e. light intensities at λ₂), the recovery rate of the fluorescent signal will essentially be determined by the photochemical step PAS₂, while at "high" I₂ values it will essentially be determined by the thermal step TAS₂. Therefore, measurements at different light intensities at wavelength λ₂ (II_{low}, and II_{high} conditions) will provide additional non-redundant information on the RSFP dynamics. Overall, the RSFP can be identified by four relaxation times issued from four measurements performed in different illumination conditions. An interesting application of that is to enable discrimination of the RSFP in a fourdimensional space whose dimensions are function (e.g. logarithms) of the relaxation times.

In order to measure relaxation times characterizing the RSFP, the data processor drives the light sources of the apparatus to illuminate the sample according to an illumination sequence which is constituted by a plurality of subsequences. Each subsequence is a succession of periods consisting of a type-I illumination time window and a type-II illumination time window, as illustrated on figures 10A and 10B.

More precisely, in a first set of subsequences (Fig. 10A) the light intensity at λ₁ is constant and gradually increased or decreased, over a broad range (as broad as allowed by the apparatus) from one subsequence of the set to another, while the light intensity at λ₂ alternates between zero and a constant value. A first series of measurements FS1 of the (decreasing) fluorescence signal is performed during type-I time windows of the subsequences. Suitable data processing, e.g. an exponential fitting, allows determining a decrease rate constant of the fluorescence signal as a function of I₁. This rate constant tends towards k₁ for vanishingly small light intensities (when the photochemical step of the reaction is slower than the thermal one and therefore dominates the kinetics) and towards k_{A'} for very high intensities (when the thermal step is slower than the photochemical one and therefore dominates the kinetics).

In a second set of subsequences (Fig. 10B) the light intensity at λ₂ alternates between zero and a constant value gradually increased or decreased, over a broad range (as broad as allowed by the apparatus) from one subsequence of the set to another, while the light intensity at λ₁ is maintained at a constant value. A second series of measurements FS2 of the (increasing) fluorescence signal is performed during type-II time windows of the subsequences. Suitable data processing, e.g. an exponential fit, allows determining a recovery rate constant of the fluorescence signal as a function of I₂. This rate constant tends towards k₂ for vanishingly small light intensities (when the photochemical step of the reaction is slower than the thermal one and therefore dominates the kinetics) and towards k_{B'} for very high intensities (when the thermal step is slower than the photochemical one and therefore dominates the kinetics).

In the examples of figures 10A and 10B each subsequence comprises three periods, FS1 measurements are performed in the type-I window of the second period, FS2 measurements are performed in the type-II window of the first period and the third period is used to assess the effects of bleaching. Alternatively, the FS1 measurements may be performed in the first type-I window of the first period: the chemical dynamics during this time window is singular. However the relaxation time extracted from a simple exponential has been experimentally found similar to the one extracted from the type-I window of the second period. The advantage of using the first type-I window is that the amplitude of the signal change is higher.

In order to determine suitable durations for the time windows, in a preliminary step, type-I and type-II illuminations are alternatively applied using strong LED light and the fluorescence evolution at the transition is analyzed using an unsupervised bi-exponential fitting, yielding a "fast" and a "slow" relaxation time. The duration of the time windows is set chosen larger than a few times the order of magnitude of the thus-determined fast relaxation time. For instance, in an embodiment of the invention, the half period (i.e. duration of a time window) has been set at 5 s for LED illumination, while for laser illumination the half period was chosen inversely proportional to the light intensity (I₁ during the measurement of figure 10A, I₂ during the measurement of figure 10B) to minimize the influence of diffusion.

Figure 11 shows the energy levels and transitions for a fluorescent protein (FPs) having a dark lower triplet state. Absorption of a photon at wavelength λ₁ excites ground state A to A* with a rate constant k_{A}(I₁) proportional to the light intensity I₁. Radiative decay occurs very fast, with rate constant k₋₁, independent of light intensity. Moreover, state A* can also experience non-radiative decay to the dark triplet state T at a much lower thermal (i.e. independent of light intensity) rate constant k_{A*}. In turn, the triplet state T returns to the ground state A with a thermal rate constant k_{T}.

In order to measure relaxation times characterizing the FP, the data processor drives the light sources of the apparatus to illuminate the sample according to an illumination sequence which is constituted by a plurality of subsequences. Each subsequence comprises a succession of time windows wherein the sample is illuminated with a constant intensity at λ₁ (type-I illumination) alternating with second time windows 0 of increasing (more generally, varying) durations wherein the sample is not illuminated. The constant intensity of the type-I illumination increases from one subsequence to the next. Figure 12A is a zoom of the first three time windows of a subsequence, while figure 12B displays the application of variable time delay t_{d} in the dark at fixed light intensity I₁ and the reconstruction of the recovered signal I_{F}^{R} using the signal difference between the beginning of the second illumination and steady-state at the end of the first illumination.

A first series of measurements FS1' of the (decreasing) fluorescence signal is performed during at least one type-I illumination time window of each subsequence (Fig. 12A). Suitable data processing, e.g. an exponential fit, allows determining a decrease rate of the fluorescence signal as a function of I₁, representative of k_{A}. It is assumed that the time windows are long enough to ensure that the fluorescence signal does not anymore significantly vary before its end.

A second series of measurements FS2' are performed at the beginning of the type-I illumination time windows (note that a same measurement may belong to both the first and the second series of measurement), as illustrated on the left part of figure 12B. Each measurement provides information on the recovery of the fluorescence signal during the varying durations t_{d,1}, t_{d,2}, t_{d,3}... of the "dark" windows 0₁, 0₂, 0₃ (not necessarily monotonically increasing as in the present example). These measurements allow reconstructing a fluorescence recovery signal (right part of figure 12B). Suitable data processing, e.g. an exponential fit, allows determining a recovery rate of the fluorescence signal as a function of I₁, representative of k_{T}.

It should be understood that different illuminations and measurement sequences may be used for characterizing RSFP, FP. For instance, in examples not falling under the invention, during a subsequence the light intensities may be modulated continuously instead of being switched on and off, or switched between two nonzero values (e.g. a small but non-vanishing intensity at wavelength λ₂ may be maintained during the "type-I" time windows of figures 10A and 10B).

Also, other fluorophores and more generally other, not necessarily fluorescent, photochemically active samples may be characterized.

The samples need not be a homogeneous liquid contained in a fluidic cell. For instance, the sample may be or include a suspension, a gel, an emulsion, a porous material with liquid-filled pores, a compartmentalized liquid (e.g. cytoplasm in a cell or biological tissue), etc. Moreover, even if the inventive apparatus is optimized for dealing with liquid or liquid-containing samples in which molecular diffusion is important, it can also be used to analyze samples showing no or little molecular diffusion at the scale of the illuminated region, such as crystalline or amorphous solids.

### References

[Marriott 2008] G. Marriott, S. Mao, T. Sakata, J. Ran, D. K. Jackson, C. Petchprayoon, T. J. Gomez, E. Warp, O. Tulyathan, H. L. Aaron, E. Y. Isacoff, and Y. Yan. Optical lock-in detection imaging microscopy for contrast enhanced imaging in living cells. Proc. Natl. Acad. Sci. U. S. A., 105:17789-17794, 2008.

[Widengren 2010] J.Widengren. Fluorescence-based transient state monitoring for biomolecular spectroscopy and imaging. J. R. Soc. Interface, 7:1135-1144, 2010.

[Richards 2010] C. I. Richards, J.-C. Hsiang, and R. M. Dickson. Synchronously amplified fluorescence image recovery (SAFIRe). J. Phys. Chem. B, 114:660-665, 2010.

[Quérard 2015] J. Quérard, T.-Z. Markus, M.-A. Plamont, C. Gauron, P. Wang, A. Espagne, M. Volovitch, S. Vriz,V. Croquette, A. Gautier, T. Le Saux, and L. Jullien. Photoswitching kinetics and phase-sensitive detection add discriminative dimensions for selective fluorescence imaging. Angew. Chem. Int. Ed., 127:2671- 2675, 2015.

[Quérard 2017] J. Quérard, R. Zhang, Z. Kelemen, M.-A. Plamont, X. Xie, R. Chouket, I. Roemgens, Y. Korepina, S. Albright, E. Ipendey, M. Volovitch, H. L. Sladitschek, P. Neveu, L. Gissot, A. Gautier, J.-D. Faure, V. Croquette, T. Le Saux, and L. Jullien. Resonant out-of-phase fluorescence microscopy and remote imaging overcome spectral limitations. Nat. Comm., 8:969, 2017.

## Claims

1. An apparatus for performing photochemical measurements on a liquid or liquid-containing sample (LS) comprising: a light generating system (LGS), an optical system (OS,OS') configured for directing light from the light generating system towards the sample, a processor (PR) configured or programmed for controlling the light generating system by modulating the light intensity values for illuminating the sample according to a predetermined illumination sequence and a sensing system (SS, SS') for measuring at least one optical property of the sample, wherein:
- the light generating system comprises at least one first and at least one second light sources configured for generating light at a same wavelength with intensity levels adjustable within a first intensity range and a second intensity range, respectively, the first intensity range comprising intensity levels higher than those of the second intensity range, a union of the first and the second intensity ranges spanning at least three and preferably at least five orders of magnitude,
- the optical system is configured for directing light from the light generating system towards the sample so as to generate a uniform light intensity level, with a tolerance of plus or minus 30%, preferably plus or minus 20% and even more preferably plus or minus 10%, within a cylindrical region of the sample having a height larger than or equal to five times its radius, said radius being of at least 0.3 µm,
wherein:
the processor is further configured for processing at least one time series of measurements from the sensing system in order to compute at least a parameter representative of a temporal evolution of a photochemical reaction within the sample, the light generating system comprises two first light sources configured for generating light at a first wavelength (λ₁) and a second wavelength (λ₂) different from the first wavelength, and two respective second light sources, each second light source being configured for generating light at the same wavelength (λ₁, λ₂) as the corresponding first light source, wherein the apparatus further comprises at least a first dichroic mirror (M1) for combining light beams emitted by the first light sources and a second dichroic mirror (M2) for combining light beams emitted by the second light sources, and wherein the illumination sequence comprises a plurality of subsequences, each subsequence comprising illuminating the sample at the first wavelength (λ₁) with a constant intensity during all the subsequence and, simultaneously, at the second wavelength (λ₂) with an intensity alternating between a first constant value (I) and a second, larger, constant value (II), the intensity values at the first wavelength and/or at the second wavelength varying from one subsequence to the next, the processor is configured for determining at least one first parameter representative of a temporal evolution of a photochemical reaction from a first series of measurements (FS1) of the optical property of the sample performed while the intensity value at the second wavelength is equal to the first constant value, and at least one second time constant from a second series (FS2) of measurements of the optical property of the sample performed while the intensity value at the second wavelength is equal to the second constant value; or
- the illumination sequence comprises a plurality of subsequences, each subsequence comprising a succession of first time windows wherein the sample is illuminated at a first wavelength (λ₁) with a constant intensity (I) alternating with second time windows of increasing durations wherein the sample is not illuminated (0), the constant intensity varying from one subsequence to the next, the processor is configured for determining at least one first parameter representative of a temporal evolution of a photochemical reaction from a first series of measurements (FS1') of the optical property of the sample performed during at least one first time window, and at least one second parameter representative of a temporal evolution of the photochemical reaction from a second series of measurements (FS2') of the optical property of the sample performed at the beginning of a plurality of successive first time windows, preferably the processor is further configured for processing at least one time series of measurements from the sensing system in order to compute at least a parameter representative of a temporal evolution of a photochemical reaction within the sample.

2. The apparatus of claim 1, wherein the at least one second light source is a light-emitting diode (LED1, LED2).

3. The apparatus of claim 1, wherein the at least one first light source is a laser (LD1, LD2).

4. The apparatus of claim 3, wherein the optical system (OS) comprises:
- a beam expander (BEX1, BEX2) for enlarging a laser light beam emitted by said laser or lasers;
- a diaphragm (DGM1) for selecting a central portion of the enlarged laser light beam;
- a lens (L1) for forming a real image of the diaphragm; and
- an objective (OBJ) having a front focal plane (FFP) and a front focal plane (FFP), the real image of the diaphragm being on the front focal plane.

5. The apparatus of claim 3, wherein the optical system (OS') comprises:
- an objective (OBJ') having a front focal plane (FFP);
- a light diffuser (DIF) for uniformly diffusing a laser light beam emitted by said laser or lasers;
- a first lens (L1') disposed to be illuminated by the diffused laser light beam; and
- a second lens (L2') forming an image of a focal plane of the first lens, opposed to the light diffuser, on the front focal plane of the objective.

6. The apparatus of any one of the preceding claims, further comprising a fluidic cell (FC) suitable to contain the liquid or liquid-containing sample and having at least a transparent wall (TW), the optical system (OS,OS') being configured for directing light from the light generating system into the fluidic cell through the transparent wall or walls and for generating said uniform light intensity level within said cylindrical region, which is comprised within the fluidic cell.

7. The apparatus of any one of the preceding claims, wherein the sensing system comprises a light detector configured for detecting fluorescence emission from the sample.

8. The apparatus of claim 7, wherein the light detector comprises a camera (CAM).

9. The apparatus of any one of claims 7 and 8, wherein the light detector comprises at least one of a photomultiplier (PMT) and a multi-pixel photon counter (MPPC).

10. The apparatus of any one of the preceding claims, wherein the cylindrical region has a radius of at least 3 µm.

## Patentansprüche

1. Einrichtung zur Durchführung photochemischer Messungen bei einer Flüssigkeit oder flüssigkeitshaltigen Probe (LS), umfassend: ein lichterzeugendes System (LGS), ein optisches System (OS,OS'), das zum Leiten von Licht vom lichterzeugenden System in Richtung der Probe ausgebildet ist, einen Prozessor (PR), der zum Steuern des lichterzeugenden Systems durch Modulieren der Lichtintensitätswerte zum Beleuchten der Probe gemäß einer vorbestimmten Beleuchtungssequenz ausgebildet oder programmiert ist, und ein Erfassungssystem (SS, SS') zum Messen mindestens einer optischen Eigenschaft der Probe, wobei:
- das lichterzeugende System mindestens eine erste und mindestens eine zweite Lichtquelle umfasst, die zum Erzeugen von Licht mit einer gleichen Wellenlänge mit Intensitätsstufen ausgebildet sind, die jeweils innerhalb eines ersten Intensitätsbereichs und eines zweiten Intensitätsbereichs einstellbar sind, wobei der erste Intensitätsbereich Intensitätsstufen umfasst, die höher sind als jene des zweiten Intensitätsbereichs, wobei sich ein Zusammenschluss des ersten und des zweiten Intensitätsbereichs über mindestens drei und vorzugsweise mindestens fünf Größenordnungen erstreckt,
- das optische System zum Leiten von Licht vom lichterzeugenden System in Richtung der Probe ausgebildet ist, um eine einheitliche Lichtintensitätsstufe mit einer Toleranz von plus oder minus 30%, vorzugsweise plus oder minus 20% und selbst noch bevorzugter plus oder minus 10% innerhalb eines zylindrischen Bereichs der Probe zu erzeugen, der eine Höhe aufweist, die größer oder gleich dem Fünffachen seines Radius ist, wobei der Radius mindestens 0,3 µm beträgt,
wobei:
der Prozessor weiter zum Verarbeiten mindestens einer Zeitreihe von Messungen aus dem Erfassungssystem ausgebildet ist, um mindestens einen Parameter zu berechnen, der für eine zeitliche Entwicklung einer photochemischen Reaktion innerhalb der Probe repräsentativ ist, das lichterzeugende System zwei erste Lichtquellen, die zum Erzeugen von Licht mit einer ersten Wellenlänge (λ₁) und einer zweiten Wellenlänge (λ₂), die sich von der ersten Wellenlänge unterscheidet, ausgebildet sind, und zwei entsprechende zweite Lichtquellen umfasst, wobei jede zweite Lichtquelle zum Erzeugen von Licht mit der gleichen Wellenlänge (λ₁, λ₂) wie die entsprechende erste Lichtquelle ausgebildet ist, wobei die Einrichtung weiter mindestens einen ersten dichroitischen Spiegel (M1) zum Kombinieren von Lichtstrahlen, die von den ersten Lichtquellen ausgesendet werden, und einen zweiten dichroitischen Spiegel (M2) zum Kombinieren von Lichtstrahlen, die von den zweiten Lichtquellen ausgesendet werden, umfasst, und wobei die Beleuchtungssequenz eine Vielzahl von Untersequenzen umfasst, wobei jede Untersequenz das Beleuchten der Probe mit einer konstanten Intensität bei der ersten Wellenlänge (λ₁) während der gesamten Untersequenz und gleichzeitig bei der zweiten Wellenlänge (λ₂) mit einer Intensität, die zwischen einem ersten konstanten Wert (I) und einem zweiten, größeren, konstanten Wert (II) wechselt, umfasst, wobei die Intensitätswerte bei der ersten Wellenlänge und/oder bei der zweiten Wellenlänge von einer Untersequenz zur nächsten variieren, der Prozessor zum Bestimmen mindestens eines ersten Parameters ausgebildet ist, der für eine zeitliche Entwicklung einer photochemischen Reaktion aus einer ersten Reihe von Messungen (FS1) der optischen Eigenschaft der Probe repräsentativ ist, die durchgeführt werden, während der Intensitätswert bei der zweiten Wellenlänge gleich dem ersten konstanten Wert ist, und mindestens eine zweite Zeitkonstante aus einer zweiten Reihe (FS2) von Messungen der optischen Eigenschaft der Probe, die durchgeführt werden, während der Intensitätswert bei der zweiten Wellenlänge gleich dem zweiten konstanten Wert ist; oder
- die Beleuchtungssequenz eine Vielzahl von Untersequenzen umfasst, wobei jede Untersequenz eine Folge von ersten Zeitfenstern, in denen die Probe bei einer ersten Wellenlänge (λ₁) mit einer konstanten Intensität (I) beleuchtet wird, abwechselnd mit zweiten Zeitfenstern mit zunehmender Dauer, in denen die Probe nicht beleuchtet (0) wird, umfasst, wobei die konstante Intensität von einer Untersequenz zur nächsten variiert, wobei der Prozessor zum Bestimmen mindestens eines ersten Parameters ausgebildet ist, der für eine zeitliche Entwicklung einer photochemischen Reaktion aus einer ersten Reihe von Messungen (FS1') der optischen Eigenschaft der Probe repräsentativ ist, die während mindestens eines ersten Zeitfensters durchgeführt wird, und mindestens einen zweiten Parameter, der für eine zeitliche Entwicklung der photochemischen Reaktion aus einer zweiten Reihe von Messungen (FS2') der optischen Eigenschaft der Probe repräsentativ ist, die zu Beginn einer Vielzahl von aufeinanderfolgenden ersten Zeitfenstern durchgeführt wird, wobei der Prozessor vorzugsweise weiter zum Verarbeiten mindestens einer Zeitreihe von Messungen aus dem Erfassungssystem ausgebildet ist, um mindestens einen Parameter zu berechnen, der für eine zeitliche Entwicklung einer photochemischen Reaktion innerhalb der Probe repräsentativ ist.

2. Einrichtung nach Anspruch 1, wobei die mindestens eine zweite Lichtquelle eine Leuchtdiode (LED1, LED2) ist.

3. Einrichtung nach Anspruch 1, wobei die mindestens eine erste Lichtquelle ein Laser (LD1, LD2) ist.

4. Einrichtung nach Anspruch 3, wobei das optische System (OS) umfasst:
- eine Strahlaufweitung (BEX1, BEX2) zum Vergrößern eines Laserlichtstrahls, der von dem oder den Lasern ausgesendet wird;
- eine Blende (DGM1) zum Auswählen eines zentralen Abschnitts des vergrößerten Laserlichtstrahls;
- eine Linse (L1) zum Bilden eines reales Bildes der Blende; und
- ein Objektiv (OBJ), das eine vordere Brennebene (FFP) und eine vordere Brennebene (FFP) aufweist, wobei das reale Bild der Blende auf der vorderen Brennebene liegt.

5. Einrichtung nach Anspruch 3, wobei das optische System (OS') umfasst:
- ein Objektiv (OBJ'), das eine vordere Brennebene (FFP) aufweist;
- einen Lichtdiffusor (DIF) zum einheitlichen Diffundieren eines Laserlichtstrahls, der von dem oder den Lasern ausgesendet wird;
- eine erste Linse (L1'), die angeordnet ist, um vom diffundierten Laserlichtstrahl beleuchtet zu werden; und
- eine zweite Linse (L2'), die ein Bild einer Brennebene der ersten Linse entgegengesetzt zum Lichtdiffusor, auf der vorderen Brennebene des Objektivs bildet.

6. Einrichtung nach einem der vorstehenden Ansprüche, weiter umfassend eine Fluidikzelle (FC), die geeignet ist, um die Flüssigkeit oder flüssigkeitshaltige Probe aufzunehmen, und mindestens eine transparente Wand (TW) aufweist, wobei das optische System (OS,OS') zum Leiten von Licht vom lichterzeugenden System durch die transparente Wand oder die transparenten Wände hindurch in die Fluidikzelle, und zum Erzeugen der einheitlichen Lichtintensitätsstufe innerhalb des zylindrischen Bereichs ausgebildet ist, der in der Fluidikzelle umfasst ist.

7. Einrichtung nach einem der vorstehenden Ansprüche, wobei das Erfassungssystem einen Lichtdetektor umfasst, der zum Detektieren von Fluoreszenzemission aus der Probe ausgebildet ist.

8. Einrichtung nach Anspruch 7, wobei der Lichtdetektor eine Kamera (CAM) umfasst.

9. Einrichtung nach einem der Ansprüche 7 und 8, wobei der Lichtdetektor einen Photovervielfacher (PMT) oder/und einen Multipixel-Photonenzähler (MPPC) umfasst.

10. Einrichtung nach einem der vorstehenden Ansprüche, wobei der zylindrische Bereich einen Radius von mindestens 3 µm aufweist.

## Revendications

1. Appareil pour réaliser des mesures photochimiques sur un liquide ou un échantillon contenant un liquide (LS) comprenant : un système de génération de lumière (LGS), un système optique (OS, OS') configuré pour diriger la lumière provenant du système de génération de lumière vers l'échantillon, un processeur (PR) configuré ou programmé pour commander le système de génération de lumière en modulant les valeurs d'intensité lumineuse pour éclairer l'échantillon selon une séquence d'éclairage prédéterminée et un système de détection (SS, SS') pour mesurer au moins une propriété optique de l'échantillon, dans lequel :
- le système de génération de lumière comprend au moins une première et au moins une deuxième source lumineuse configurées pour générer de la lumière à une même longueur d'onde avec des niveaux d'intensité réglables dans une première plage d'intensité et une deuxième plage d'intensité, respectivement, la première plage d'intensité comprenant des niveaux d'intensité supérieurs à ceux de la deuxième plage d'intensité, une union des première et deuxième plages d'intensité s'étendant sur au moins trois et de préférence au moins cinq ordres de grandeur,
- le système optique est configuré pour diriger la lumière provenant du système de génération de lumière vers l'échantillon de manière à générer un niveau d'intensité lumineuse uniforme, avec une tolérance de plus ou moins 30 %, de préférence de plus ou moins 20 % et encore plus préférentiellement de plus ou moins 10 %, au sein d'une région cylindrique de l'échantillon présentant une hauteur supérieure ou égale à cinq fois son rayon, ledit rayon étant d'au moins 0,3 µm,
dans lequel :
le processeur est en outre configuré pour traiter au moins une série temporelle de mesures à partir du système de détection afin de calculer au moins un paramètre représentatif d'une évolution temporelle d'une réaction photochimique au sein de l'échantillon, le système de génération de lumière comprend deux premières sources lumineuses configurées pour générer de la lumière à une première longueur d'onde (λ₁) et une deuxième longueur d'onde (λ₂) différente de la première longueur d'onde, et deux deuxièmes sources lumineuses respectives, chaque deuxième source lumineuse étant configurée pour générer de la lumière à la même longueur d'onde (λ₁, λ₂) que la première source lumineuse correspondante, dans lequel l'appareil comprend en outre au moins un premier miroir dichroïque (M1) pour combiner des faisceaux lumineux émis par les premières sources lumineuses et un deuxième miroir dichroïque (M2) pour combiner des faisceaux lumineux émis par les deuxièmes sources lumineuses, et dans lequel la séquence d'éclairage comprend une pluralité de sous-séquences, chaque sous-séquence comprenant l'éclairage de l'échantillon à la première longueur d'onde (λ₁) avec une intensité constante pendant toute la sous-séquence et, simultanément, à la deuxième longueur d'onde (λ₂) avec une intensité alternant entre une première valeur constante (I) et une deuxième valeur constante plus élevée (II), les valeurs d'intensité à la première longueur d'onde et/ou à la deuxième longueur d'onde variant d'une sous-séquence à la suivante, le processeur est configuré pour déterminer au moins un premier paramètre représentatif d'une évolution temporelle d'une réaction photochimique à partir d'une première série de mesures (FS1) de la propriété optique de l'échantillon réalisée alors que la valeur d'intensité à la deuxième longueur d'onde est égale à la première valeur constante, et au moins une deuxième constante de temps à partir d'une deuxième série (FS2) de mesures de la propriété optique de l'échantillon réalisées alors que la valeur d'intensité à la deuxième longueur d'onde est égale à la deuxième valeur constante ; ou
- la séquence d'éclairage comprend une pluralité de sous-séquences, chaque sous-séquence comprenant une succession de premières fenêtres temporelles dans lesquelles l'échantillon est éclairé à une première longueur d'onde (λ₁) avec une intensité constante (I) en alternance avec de deuxièmes fenêtres temporelles de durées croissantes dans lesquelles l'échantillon n'est pas éclairé (0), l'intensité constante variant d'une sous-séquence à la suivante, le processeur est configuré pour déterminer au moins un premier paramètre représentatif d'une évolution temporelle d'une réaction photochimique à partir d'une première série de mesures (FS1') de la propriété optique de l'échantillon réalisées pendant au moins une première fenêtre temporelle, et au moins un deuxième paramètre représentatif d'une évolution temporelle de la réaction photochimique à partir d'une deuxième série de mesures (FS2') de la propriété optique de l'échantillon réalisées au début d'une pluralité de premières fenêtres temporelles successives, de préférence, le processeur est en outre configuré pour traiter au moins une série temporelle de mesures à partir du système de détection afin de calculer au moins un paramètre représentatif d'une évolution temporelle d'une réaction photochimique au sein de l'échantillon.

2. Appareil selon la revendication 1, dans lequel l'au moins une deuxième source lumineuse est une diode électroluminescente (LED1, LED2).

3. Appareil selon la revendication 1, dans lequel l'au moins une première source lumineuse est un laser (LD1, LD2).

4. Appareil selon la revendication 3, dans lequel le système optique (OS) comprend :
- un dilatateur de faisceau (BEX1, BEX2) pour agrandir un faisceau lumineux laser émis par ledit ou lesdits lasers ;
- un diaphragme (DGM1) pour sélectionner une partie centrale du faisceau lumineux laser agrandi ;
- une lentille (L1) pour former une image réelle du diaphragme ; et
- un objectif (OBJ) présentant un plan focal avant (FFP) et un plan focal avant (FFP), l'image réelle du diaphragme étant sur le plan focal avant.

5. Appareil selon la revendication 3, dans lequel le système optique (OS') comprend :
- un objectif (OBJ') présentant un plan focal avant (FFP) ;
- un diffuseur de lumière (DIF) pour diffuser uniformément un faisceau lumineux laser émis par ledit ou lesdits lasers ;
- une première lentille (L1') disposée pour être éclairée par le faisceau lumineux laser diffusé ; et
- une deuxième lentille (L2') formant une image d'un plan focal de la première lentille, opposé au diffuseur de lumière, sur le plan focal avant de l'objectif.

6. Appareil selon l'une quelconque des revendications précédentes, comprenant en outre une cellule fluidique (FC) appropriée pour contenir le liquide ou l'échantillon contenant un liquide et présentant au moins une paroi transparente (TW), le système optique (OS, OS') étant configuré pour diriger la lumière provenant du système de génération de lumière dans la cellule fluidique à travers la ou les parois transparentes et pour générer ledit niveau d'intensité lumineuse uniforme au sein de ladite région cylindrique, qui est comprise au sein de la cellule fluidique.

7. Appareil selon l'une quelconque des revendications précédentes, dans lequel le système de détection comprend un détecteur de lumière configuré pour détecter une émission de fluorescence provenant de l'échantillon.

8. Appareil selon la revendication 7, dans lequel le détecteur de lumière comprend une caméra (CAM).

9. Appareil selon l'une quelconque des revendications 7 et 8, dans lequel le détecteur de lumière comprend au moins l'un parmi un photomultiplicateur (PMT) et un compteur de photons multipixel (MPPC).

10. Appareil selon l'une quelconque des revendications précédentes, dans lequel la région cylindrique présente un rayon d'au moins 3 µm.
